# EUROPEAN PATENT SPECIFICATION

(11) **EP 4 528 667 B1**
(45) Date of publication and mention of the grant of the patent: **11.11.2026**
(21) Application number: 23198638.1
(22) Date of filing: 20.09.2023
(51) Int. Cl.: G06V 10/772, G06V 10/774, G06V 10/82, G06V 20/56, G06V 20/58, G06N 3/0455, G06N 3/0475, G06T 5/77, G06T 11/00

(54) **COMPUTER-IMPLEMENTED METHOD AND DEVICE FOR GENERATING A SYNTHETIC DIGITAL IMAGE WITH A DIFFUSION MODEL**
COMPUTERIMPLEMENTIERTES VERFAHREN UND VORRICHTUNG ZUR ERZEUGUNG EINES SYNTHETISCHEN DIGITALBILDES MIT EINEM DIFFUSIONSMODELL
PROCÉDÉ ET DISPOSITIF MIS EN OEUVRE PAR ORDINATEUR POUR GÉNÉRER UNE IMAGE NUMÉRIQUE SYNTHÉTIQUE AVEC UN MODÈLE DE DIFFUSION

(43) Date of publication of application: 26.03.2025
(73) Proprietor: Robert Bosch GmbH, 70442 Stuttgart (DE)
(72) Inventor: Khoreva, Anna, 70197 Stuttgart (DE); Li, Yumeng, 72070 Tuebingen (DE); Zhang, Dan, 71229 Leonberg (DE)

(56) References cited:
- US-A1- 2023 267 653
- WEILUN WANG ET AL: "Semantic Image Synthesis via Diffusion Models", ARXIV.ORG, CORNELL UNIVERSITY LIBRARY, 201 OLIN LIBRARY CORNELL UNIVERSITY ITHACA, NY 14853, 22 November 2022 (2022-11-22), XP091374627
- MARWANE HARIAT ET AL: "Learning to Generate Training Datasets for Robust Semantic Segmentation", ARXIV.ORG, CORNELL UNIVERSITY LIBRARY, 201 OLIN LIBRARY CORNELL UNIVERSITY ITHACA, NY 14853, 1 August 2023 (2023-08-01), XP091587399
- ROMBACH ROBIN ET AL: "High-Resolution Image Synthesis with Latent Diffusion Models", 2022 IEEE/CVF CONFERENCE ON COMPUTER VISION AND PATTERN RECOGNITION (CVPR), IEEE, 18 June 2022 (2022-06-18), pages 10674 - 10685, XP034194085, DOI: 10.1109/CVPR52688.2022.01042

## Description

### Background

The invention relates to a computer-implemented method and a device for generating a synthetic digital image with a diffusion model.

Diffusion models may be used to generate the synthetic digital image from an input that comprises random noise. A condition for a semantic layout of the synthetic digital image may be added to control the content of the synthetic digital image.

An example for a diffusion model using a condition is Control Net as described in "Adding Conditional Control to Text-to-Image Diffusion Models", Feb. 10, 2023, Lvmin Zhang, Maneesh Agrawala, https://arxiv.org/abs/2502.05543.

Weilung Wang et al, "Semantic Image Synthesis via Diffusion Models" (arXiv:2207.00050v2), arXiv.org, 22 November 2022, and

Marwane Hariat et al, "High-Resolution Image Synthesis with Latent Diffusion Models" (arXiv:2308.02535v2), arXiv.org, 1 August 2023, disclose further examples.

### Disclosure of the invention

In ControlNet, the condition is only used at the input of the ControlNet, wherein a representation of the condition is added to an original representation of a synthetic digital image in a latent space of a diffusion model. Therefore, with ControlNet, the condition is used in an indirect way in the diffusion model.

The computer-implemented method and the device according to the independent claims use the condition to modulate features in the diffusion model at a given level of the diffusion model without propagating the condition through other levels of the diffusion model.

The method for generating a synthetic digital image with the diffusion model, in particular for generating training and/or test data for training a machine learning system or for training an image classifier, comprises sampling an input from a probability distribution, in particular a Gaussian distribution, providing a condition for a semantic layout of the synthetic digital image, in particular a text, a class label, a semantic label map, a two-dimensional or a three dimensional pose, or a depth map, and mapping the input with the diffusion model to an output of the diffusion model, wherein the synthetic digital image comprises the output, or wherein the synthetic digital image is generated depending on the output, wherein the diffusion model comprises successive levels, wherein mapping the input with the diffusion model to the output comprises successively determining features at the levels depending on the input, inputting the condition to the diffusion model at at least one level of the levels, modulating the features of at least one level of the levels depending on the condition, and determining the output of the diffusion model depending on the modulated features, mapping the input to the output comprises determining a sequence of outputs comprising the output, wherein determining the sequence of outputs comprises determining a first output of the sequence depending on a result of encoding the input and decoding the encoded input, and successively determining a next output in the sequence depending on the result of encoding the output preceding the next output in the sequence and decoding the encoded output preceding the next output in the sequence, wherein encoding comprises determining the features at the levels and modulating the features with a SPADE block depending on the condition, and determining the modulated features at one of the different levels depending on the features or modulated features from another level. This means the features of at least one of the levels of the diffusion model are modulated with the condition directly rather than propagating the condition through other levels before modulating features. This means, the sequence is determined in stages wherein a stage comprises a set of an encoder followed by a decoder and the features of the respective encoder or decoder are modulated. The features of an encoder may be modulated in one stage, in multiple stages or in all stages. This means, the features of one level are modulated and used as the features of a different level.

Mapping the input with the diffusion model to the output may comprise inputting the condition to the diffusion model at different levels of the levels, modulating the features at the different levels depending on the condition inputted at the respective level of the different levels, and determining the output of the diffusion model depending on the modulated features modulated at the different levels. This means the features of different levels are modulated directly depending on the condition.

The method may comprise training the diffusion model to generate the synthetic digital image depending on a digital reference image captured with a sensor, in particular a video, radar, LiDAR, ultrasonic, motion, or thermal image, wherein the condition of the semantic layout of the synthetic digital image comprises a semantic layout of the digital reference image. The digital reference image represents the real world as seen by the sensor. The diffusion model resulting from training is capable of generating synthetic digital images that mimic the real world. The synthetic digital image may serve as training image for training a machine learning system e.g., for semantic segmentation, or object recognition, or classification of objects. The diffusion model may be a neural network that comprises parameters. The parameters of the diffusion model may be weights of the neural network resembling the diffusion model. Training the diffusion model may comprise learning the parameters.

Providing the condition may comprise providing the semantic layout for a position in the synthetic digital image or a shape of a background, or of an object, in particular a traffic sign, a road surface, a pedestrian, a vehicle, an animal, a plant, infrastructure, or the sky.

The method may comprise determining the modulated features at one of the different levels depending on the features from the same level. This means the modulated features replace the unmodulated features of the level.

Decoding may comprise determining the features at the levels and/or modulating the features depending on the condition. This means, the features of the respective decoder are modulated. The features of a decoder may be modulated in one stage, in multiple stages or in all stages.

A computer-implemented method for providing a machine learning system, in particular a neural network for semantic segmentation, object recognition or classification of objects, comprises generating a synthetic digital image with the method for generating the synthetic digital image, and training, testing, verifying, or validating the machine learning system in particular for semantic segmentation, object recognition, or classification of objects, preferably for recognizing background or an object, in particular a traffic sign, a road surface, a pedestrian, a vehicle, an animal, a plant, infrastructure, or the sky, depending on the synthetic digital image.

A computer-implemented method for operating a technical system, in particular a computer-controlled machine, preferably a robotic system, a vehicle, a domestic appliance, a power tool, a manufacturing machine, a personal assistant or an access control system, comprises providing the machine learning system with the method for providing the machine learning system, capturing a digital image with a sensor, in particular a video, radar, LiDAR, ultrasonic, motion, or thermal image, and determining a control signal for operating the technical system with the machine learning system depending on the digital image.

The device comprises at least one processor and at least one memory, wherein the at least one memory is configured to store instructions that are executable by the at least one processor and that cause the device to perform the method according to one of the previous claims when executed by the at least one processor.

A computer program comprises computer-readable instructions that, when executed by a computer, cause the computer to execute the steps of the method.

Further advantageous embodiments are derived from the following description and the drawing. In the drawing,
Fig. 1 schematically depicts a device for generating a synthetic digital image with a diffusion model,
Fig. 2 schematically depicts a first embodiment of the diffusion model,
Fig. 3 schematically depicts a first exemplary modulation,
Fig. 4 schematically depicts a second exemplary modulation,
Fig. 5 schematically depicts a second embodiment of the diffusion model,
Fig. 6 a flow chart of a computer implemented method for generating the synthetic digital image with the diffusion model.

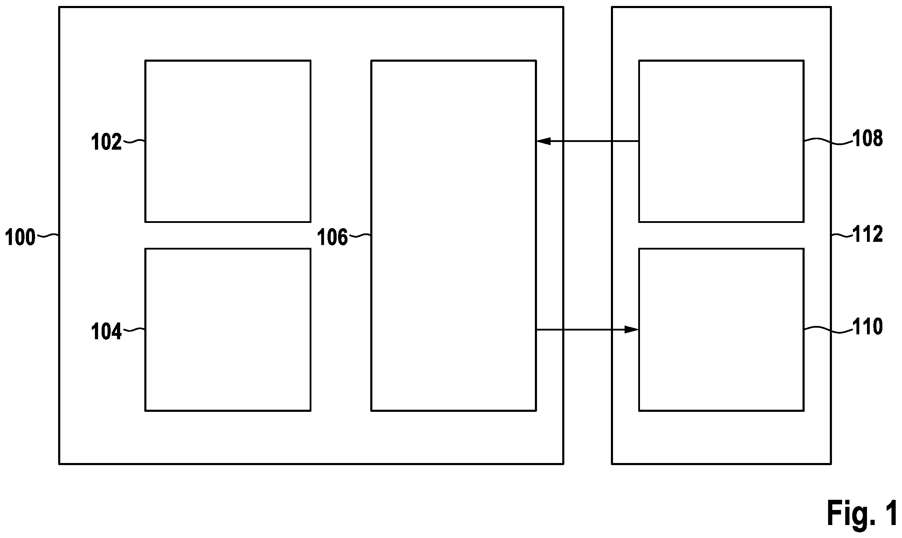

Figure 1 depicts schematically a device 100 for generating a synthetic digital image with a diffusion model.

The synthetic digital image may be a video, radar, LiDAR, ultrasonic, motion, or thermal image.

The device 100 comprises at least one processor 102 and at least one memory 104. The at least one memory 104 comprises at least one non-transitory memory. The at least one memory 104 is configured to store instructions that are executable by the at least one processor 102 and that cause the device 100 to perform a method for generating the synthetic digital image with the diffusion model, when executed by the at least one processor 102.

The device 100 may be configured to read a digital reference image from storage.

The device 100 may comprise at least one interface 106. The at least one interface 106 may be configured for receiving the digital reference image, e.g., from a sensor 108. The at least one interface 106 may be configured to output a control signal for an actuator 110.

The sensor 108 may be configured to capture a video, radar, LiDAR, ultrasonic, motion, or thermal image.

The sensor 108 or the actuator 110 may be part of a technical system 112. The technical system 112 is a physical system. The technical system 112 may be a computer-controlled machine, preferably a robotic system, a vehicle, a domestic appliance, a power tool, a manufacturing machine, a personal assistant or an access control system.

The device 100 may comprise a machine learning system that is configured to operate the technical system 112 depending on input from the sensor 108 and with output of the control signal to the actuator 110.

For example, the machine learning system is configured to determine the control signal for operating the technical system 112 depending on a digital image. The digital image may be a video, radar, LiDAR, ultrasonic, motion, or thermal image.

Determining the control signal depending on the digital image for example comprises mapping the digital image with a neural network for semantic segmentation, object recognition or classification of objects.

Determining the control signal depending on the digital image for example comprises determining the control signal depending on an output of the neural network, e.g. the semantic segmentation, object recognition, or classification of objects.

For example a background is distinguished from objects, or recognized, or classified as background in the digital image or an object is distinguished from background, or recognized, or classified, e.g. as a traffic sign, a road surface, a pedestrian, a vehicle, an animal, a plant, infrastructure, or the sky, depending on the synthetic digital image.

For example, the control signal is determined to move the technical system 112 upon recognizing or classifying the object as a predetermined object indicating that moving the technical system 112 is acceptable or stopping the technical system 112 otherwise or upon recognizing or classifying the object as a predetermined object indicating that stopping the technical system 112 is required.

Classifying the object may comprise segmentation and/or object detection.

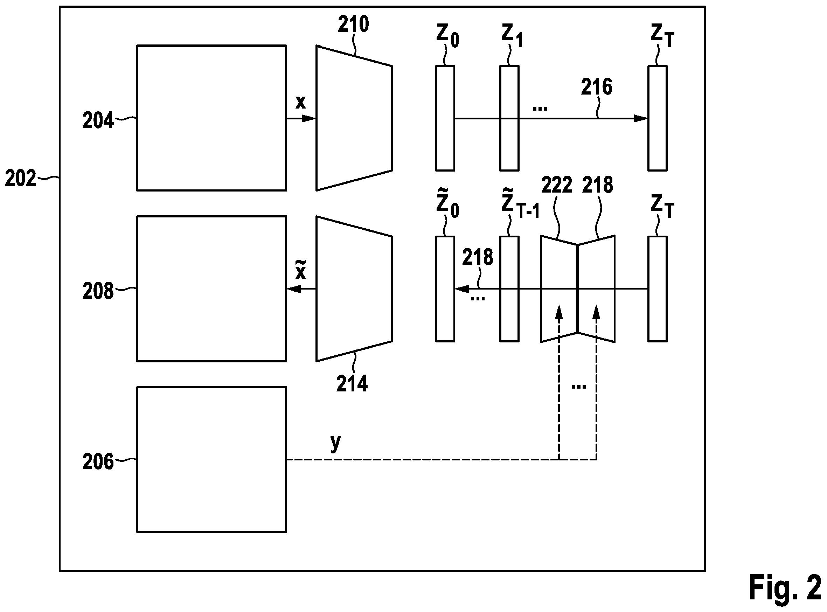

Figure 2 schematically depicts a first embodiment 202 of the diffusion model.

According to the first embodiment 202, the diffusion model is configured to receive a digital image x, e.g., a digital reference image 204, in an image space, a condition y, e.g., a digital reference condition 206, and to determine an output *x̃*, e.g., a synthetic digital image 208, in the image space. The digital image x and/or the digital reference image 204 and/or the synthetic digital image 208 may be a video, radar, LiDAR, ultrasonic, motion, or thermal image.

According to the first embodiment 202, the diffusion model comprises an encoder 210 that is configured to encode the input x, e.g., the digital reference image 204, into a representation *Z*₀, e.g., of the digital reference image 204, in a latent space of the diffusion model.

According to the first embodiment 202, the diffusion model comprises a decoder 214 that is configured to decode a representation *Z̃*₀ ,e.g., of the synthetic digital image 208, in the latent space to the output *x̃*, e.g., the synthetic digital image 208, in the image space.

The image space in the example is a pixel space, e.g., for a RGB image comprising a width W, a height H and 3 channels. The image space may comprise more or less channels.

The diffusion model according to the first embodiment 202 is configured to successively add in a forward pass 216 random noise to the representation *Z*₀ in the latent space. In the example, the diffusion model according to the first embodiment 202 is configured to determine a sequence *Z*₁, ... , *Z_{T}* of representations, wherein after the first representation *Z*₀ a next representation *Z*_{*t*+1} in the sequence is determined depending on the result of adding random noise to the representation *Zₜ* preceding the next representation *Z*_{*t*+1} in the sequence of representations.

The diffusion model according to the first embodiment 202 is configured to successively remove in a denoising process 218 random noise from the last representation *Z_{T}* in the latent space. In the example, the diffusion model according to the first embodiment 202 is configured to determine a sequence *Z̃*_{*T*-1}, ..., *Z̃*₀ of outputs depending on the last representation *Z_{T}* as input to the denoising process. A first output *Z̃*_{*t=T*-1} in the sequence is determined in the example by denoising the input *Z_{T}.* After the first output *Z̃*_{*t=T*-1} a next output *Z̃*_{*t-*1} in the sequence is determined depending on the result of denoising the output *Z̃ₜ* preceding the next output *Z̃*_{*t-*1} in the sequence of outputs.

The diffusion model according to the first embodiment 202 is configured to determine the first output *Z̃*_{*t=T*-1} depending on a result of encoding the input *Z_{T}* with an encoder 220 and decoding the encoded input with a decoder 222.

The diffusion model according to the first embodiment 202 is configured to determine the respective next output *Z̃*_{*t-*1} depending on a result of encoding the output *Z̃ₜ* preceding the next output *Z̃*_{*t-*1} with an encoder and decoding the encoded input with a decoder.

A respective encoder is configured to determine features of the encoder at different levels of the encoder. A respective decoder is configured to determine features of the decoder at different levels of the decoder.

The diffusion model according to the first embodiment 202 is configured to manipulate the features depending on the condition y. The diffusion model according to the first embodiment 202 is configured to manipulate the features of one encoder or multiple encoders or the features of one decoder or multiple decoders. The diffusion model according to the first embodiment 202 is configured to manipulate the features at at least one level or at different levels. The diffusion model according to the first embodiment 202 is configured to input the condition y to the encoder or decoder at the level or at the respective levels. According to the example, the features of a respective encoder are manipulated depending on the condition y only or depending on the condition y and the features of the same encoder. According to the example, the features of a respective decoder are manipulated depending on the condition y only or depending on the condition y and the features of the same decoder.

An example for the diffusion model is a stable diffusion model that operates in a latent space of an autoencoder.

Firstly, an encoder *ε*, i.e., the encoder 210, maps a given image x, e.g., the digital reference image 204, into a spatial latent code *Z*₀ *= ε*(*x*)*,* then *Z̃*₀ is mapped back to a prediction for the image *x̃*, e.g., the synthetic digital image 208, in the image space by a decoder D, i.e., the decoder 214. According to an example, the autoencoder is trained to reconstruct the given image, i.e., *x̃* = *D*(*E*(*x*))*.*

Secondly, the forward pass 216 and the denoising process 218 of the diffusion model are trained in the latent space.

The forward pass is a Markov chain to gradually add Gaussian noise to the spatial latent code *Z*₀: $q \left(\left.{z}_{t}\right|{z}_{t - 1}\right) : = N \left({z}_{t};\sqrt{1 - {β}_{t}} {z}_{t - 1},{β}_{t}I\right)$ where ${\left\{{β}_{t}\right\}}_{t = 0}^{T}$ are a fixed variance schedule. The noisy latent code *Z_{T}* is computed successively: ${Z}_{t} = \sqrt{{α}_{t}} {Z}_{0} + \sqrt{1 - {α}_{t}} ϵ$ where *ε~N*(0, *I*), where *Z*₀ *= ε*(*x*), and ${α}_{t} : = {\prod }_{s}^{t} \left(1-{β}_{s}\right)$.

The reverse denoising process 218 is parametrized in the example by another Gaussian distribution ${p}_{θ} \left(\left.{z}_{t - 1}\right|{z}_{t}\right) : = N \left({z}_{t - 1};{μ}_{θ}\left({z}_{t}, t\right),{σ}_{θ}\left({z}_{t}, t\right)\right)$

Essentially *µ_{θ}* (*zₜ, t*) is expressed as a linear combination of *zₜ* and predicted noise *ε_{θ}*(*zₜ,t*) which is modeled for example by the encoder and decoder that are configured to map the preceding output *zₜ* to the next output *z*_{*t*-1}.

In an example, the respective encoder and the respective decoder are implemented as a UNet. UNet is disclosed e.g., in Olaf Ronneberger, Philipp Fischer, Thomas Brox, U-Net: Convolutional Networks for Biomedical Image Segmentation, 18 May 2015, https://arxiv.org/abs/1505.04597.

The parameters of the encoder and decoder are learned in the example by minimizing the L2 norm of the noise prediction at a sampled timestep t: ${L}_{noise} = {E}_{z ∼ ε \left(x\right) , ϵ ∼ N \left(0, I\right) , t} \left[{\left‖ϵ-{ϵ}_{θ}\left({z}_{t}, t\right)\right‖}^{2}\right]$ wherein E is the expectancy value. In the training, or after an initial training of the diffusion model, the modulation of the features depending on the condition y is trained.

The features *f* may be manipulated depending on the condition y in different ways.

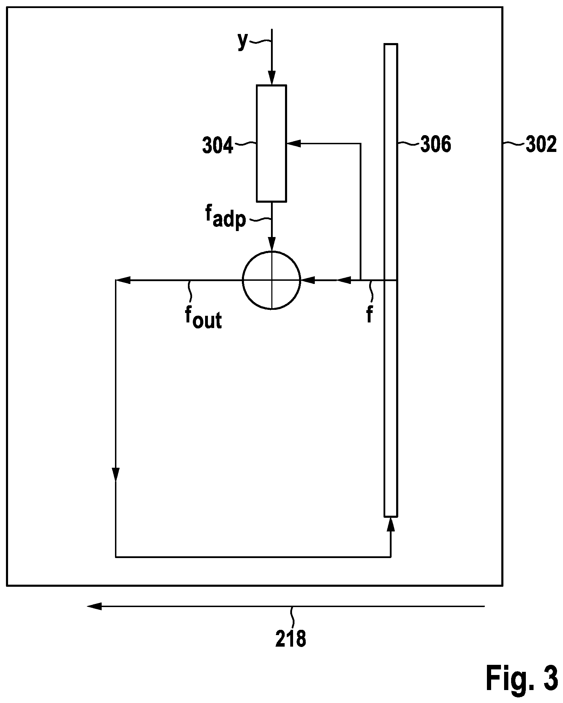

Figure 3 schematically depicts a first exemplary modulation 302.

The according to the first exemplary modulation 302, a SPADE block 304 takes the conditional input *y* and extracted features *f* from a level 306 of the frozen diffusion network, and outputs spatially modulated features *f_{adp}*, e.g., as ${f}_{adp} = \frac{f - {μ}_{f}}{{γ}_{f}} γ \left(y\right) + μ \left(y\right)$ **where** *µ_{f}* is the mean and *γ_{f}* is the standard deviation of the extracted features *f*, and where *µ*(*y*) and *γ*(*y*) are learned pixel-wise modulation parameters conditioned on the condition *y*. The SPADE block 304 is for example configured as described in, Taesung Park, Ming-Yu Liu, Ting-Chun Wang, Jun-Yan Zhu, " Semantic Image Synthesis with Spatially-Adaptive Normalization ", 5 Nov 2019, https://arxiv.org/abs/1903.07291.

According to an example, the modulated features *f_{adp}* and the extracted features *f* are added to an output *fₒᵤₜ* that replaces the extracted features *f* at the original level 306, i.e., *f* ← *fₒᵤₜ = f_{adp} + f.*

The modulated features *f_{adp}* may be inserted to replace the extracted features *f* at the original level 306, i.e., *f* ← *fₒᵤₜ* = *f_{adp}*, or inserted at another level, e.g., a level that is after the original level 306 in direction of the denoising process 218. The diffusion model according to the first embodiment 202 of the diffusion model may be configured to replace features *f* at a level with features *fₒᵤₜ = f* + tanh(*β*) *f_{adp}*, where *β* is a learnable factor and initialized e.g., as zero. This means, the modulated features *f_{adp}* are added to *f* in a learnable way.

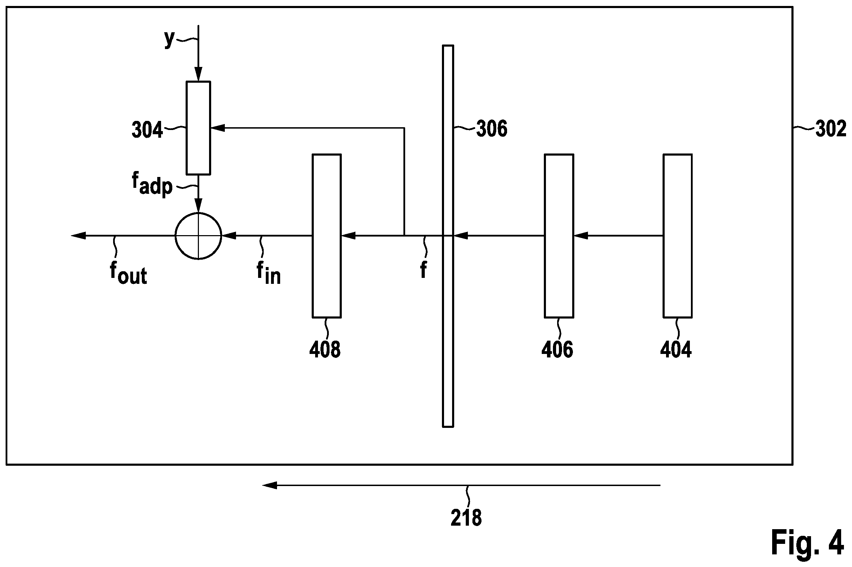

Figure 4 schematically depicts a second exemplary modulation 402. The second exemplary modulation 402 is configured as described for the first exemplary modulation 302.

The diffusion model according to the first embodiment 202 of the diffusion model may comprise a sequence of a self-attention layer 404, a cross attention layer 406 and a feed forward layer 408.

According to the second exemplary modulation 402, the features *f* are extracted from an output of the cross-attention layer 406 of the diffusion model that follows after the self-attention layer 404 of the diffusion model in direction of the denoising process 218. According to the second exemplary modulation 402, the extracted features *f* are provided as input to the SPADE block 304 and as input to the feed forward layer 408 of the diffusion model.

The diffusion model according to the first embodiment 202 of the diffusion model may comprise one or several of the parts for modulating features.

For example, SPADE blocks are inserted in parts of the diffusion model according to the first exemplary modulation 302 or the second exemplary modulation 402 at one predetermined location or at multiple predetermined locations of UNet or any other architecture of the diffusion model.

At inference time, the input *z_{T}* for the denoising process 218 is randomly sampled from the Gaussian distribution and the condition *y* is provided. Then the trained denoising encoder and decoder sets, e.g., the UNet, are sequentially applied, to obtain the denoised latent *z*_{*t*-1} given *zₜ* from to t = T to t = 1, while the features are manipulated depending on the condition y. The final synthesized image can be obtained by feeding the clean latent space code *Z̃*₀ through the decoder D: ${x}^{˜} = D \left({{Z}^{˜}}_{0}\right)$

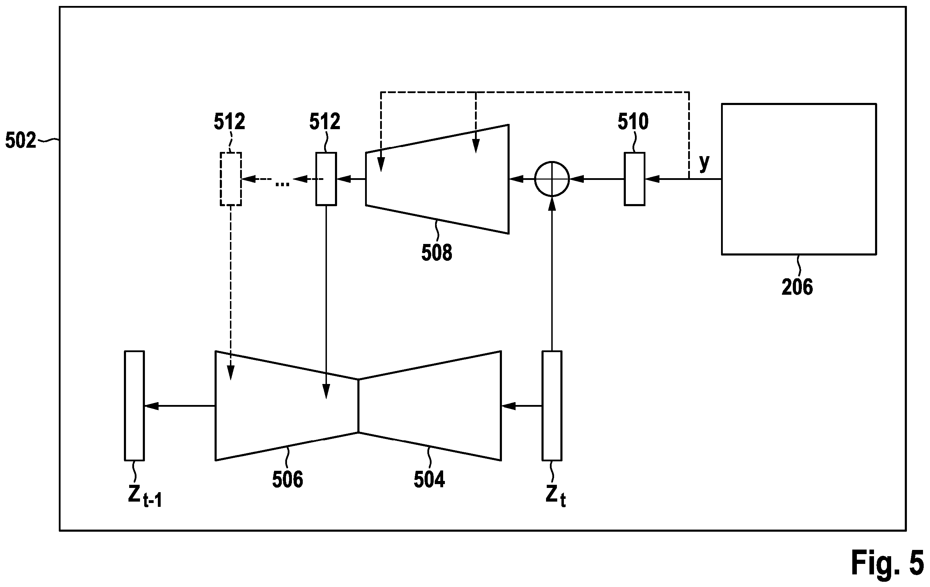

Figure 5 schematically depicts a second embodiment 502 of the diffusion model.

The diffusion model according to the second embodiment 502 is configured in the same way as described for the diffusion model according to the first embodiment 202.

Figure 5 depicts a part of the denoising process in the diffusion model according to the second embodiment 502 that is configured to determine a next output *z*_{*t*-1} depending a preceding output *zₜ* wherein the preceding output *zₜ* is encoded with an encoder 504 and decoded with a decoder 506. The diffusion model according to the second embodiment 502 is configured to control the features of the decoder 506. The diffusion model according to the second embodiment 502 comprises a trainable copy 508 of the encoder 504. The diffusion model according to the second embodiment 502 is configured to provide the condition y to a convolution 510, in particular a zero convolution, and to provide a result of adding the convolved condition y to the preceding output *zₜ* as input to the trainable copy 508 of the encoder 504. The diffusion model according to the second embodiment 502 is configured to provide the output of the trainable copy 508 of the encoder 504 to a convolution 512, in particular a zero convolution. The diffusion model according to the second embodiment 502 is configured to manipulate the features of the decoder 506 at one level depending on the output of the convolution 512. The diffusion model according to the second embodiment 502 may be configured to propagate the output of the trainable copy 508 of the encoder 504 through a series of convolutions 512, in particular zero convolutions and manipulate the features of the decoder 506 at different levels depending on the output of a respective convolution 512 of the series. Propagate means for example, that the output of a convolution 512 is used as input for a next convolution 512 in the series.

Zero convolution in this context refers to a convolution that comprises parameters, weight and bias, that are initialized as zeros before training the diffusion model and that are learned in training. In the example, the zero convolution is a 1x1 convolution. Trainable copy 508 of the encoder 504 refers to an encoder that comprises parameters that are initialized before training of the trainable copy 508 with the values of the parameters of the encoder 504. In training of the trainable copy 508, the parameters of the encoder 504 are frozen, i.e., remain unchanged, and the parameters of the trainable copy 508 are learned.

The output of the convolutions 512 and the trainable copy 508 of the encoder 504 is for example integrated in the diffusion model according to the second embodiment 502 as ControlNet, wherein the features of the trainable copy 508 of the encoder 504 are manipulated.

The diffusion model according to the second embodiment 502 is configured to modulate the features of the trainable copy 508 in the same way as described for the encoder of the diffusion model according to the first embodiment 202.

According to an example, the layers for modulating the features, e.g., the SPADE blocks, are inserted at predetermined locations of the trainable copy 508, e.g., UNet, an modulate the features of the trainable copy 508 as described for the modulation of the features in the first embodiment 202.

The diffusion model according to the second embodiment 502 is trained as described for the diffusion model according to the first embodiment 202, wherein the parameters of the trainable encoders are learned e.g., with the loss, e.g. minimizing the loss ${L}_{noise} = {E}_{z ∼ ε \left(x\right) , ϵ ∼ N \left(0, I\right) , t} \left[{\left‖ϵ-{ϵ}_{θ}\left({z}_{t}, t, y\right)\right‖}^{2}\right]$ while other parts of the diffusion model remain unchanged, wherein E is the expectancy value.

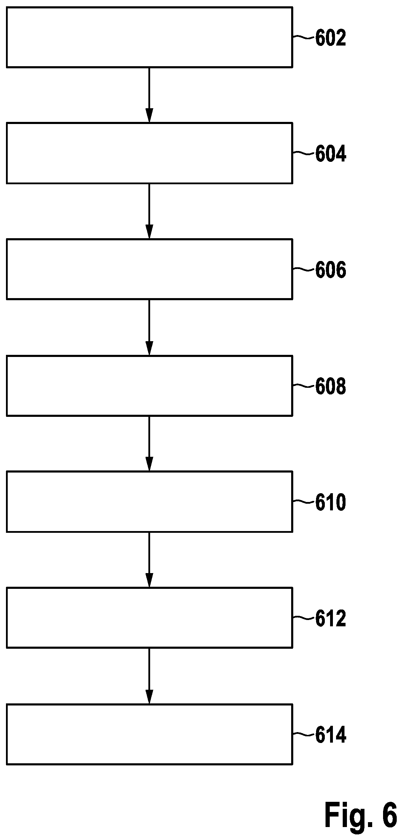

Figure 6 depicts a flow chart of a computer implemented method for generating the synthetic digital image with the diffusion model. The method provides a flexible and effective way, i.e., using spatially adaptive normalization, e.g., with SPADE blocks 304, to leverage the conditional information for diffusion models fine-tuning, and achieve faithful conditional digital image synthesis. The condition is directly applied to features at at least one level of the diffusion model.

The method comprises a step 602.

The step 602 comprises training the diffusion model to generate the synthetic digital image *x̃*.

According to an example, the diffusion model is trained depending on digital reference images captured with the sensor 108 as input x and respective reference conditions y that comprises a semantic layout of the respective digital reference image.

The digital reference images are defined in the image space. The diffusion model in the example is trained to execute the diffusion process for adding random noise to a respective latent space representation of the digital reference images.

The diffusion model may be trained to map the digital reference image to the latent space representation *Z*₀ of the digital reference image with the encoder *ε*, i.e., the encoder 210. The encoder *ε* may be trained in the training of the diffusion model, or a pretrained encoder *ε* may be used for this purpose.

The diffusion model is trained to determine the latent space representations *Z*₁, ... , *Z_{T}* successively in the forward pass 216.The diffusion model is trained to execute the denoising process 218 for removing random noise from an input *Z_{T}* to the denoising process 218. The input *Z_{T}* in training may be the last latent space representation in the forward pass 216 and may be sampled in inference. The diffusion model is trained to successively determine the latent space representations *Z̃*_{*T*-1}, ... , *Z̃*₀ in the denoising process 218.

The diffusion model may be trained to map the latent space representation *Z̃*₀ of the respective synthetic digital image *x̃* in the latent space to the respective synthetic digital image *x̃* in the image space.

The diffusion model may be trained to map the latent space representation *Z̃*₀ of the synthetic digital image *x̃* in the latent space to the synthetic digital image *x̃* in the image space with the decoder D, i.e., the decoder 214. The decoder D may be trained in the training of the diffusion model, or a pretrained decoder D may be used for this purpose.

According to another example, the diffusion model may be trained to execute the diffusion process and the denoising process in image space, i.e., without encoder or decoder for mapping between image space and latent space.

The step 602 is optional in the method for generating the synthetic digital image in inference. A pretrained diffusion model may be used in inference.

The method comprises a step 604.

The step 604 comprises sampling an input *Z_{T}* from a probability distribution, in particular a Gaussian distribution.

The method comprises a step 606.

The step 606 comprises providing a condition *y* for a semantic layout of a synthetic digital image *x̃*.

The condition y may comprise a text, a class label, a semantic label map, a two-dimensional or a three-dimensional pose, or a depth map that describes the semantic layout.

Providing the condition y may comprise providing the semantic layout for a position in the synthetic digital image *x̃* or a shape of a background, or of an object, in particular a traffic sign, a road surface, a pedestrian, a vehicle, an animal, a plant, infrastructure, or the sky.

The method comprises a step 608.

The step 608 comprises mapping the input *Z_{T}* with the diffusion model to an output of the diffusion model. The output of the diffusion model in the example is the latent space representation *Z̃*₀ of the synthetic digital image *x̃*.

Mapping the input *Z_{T}* with the diffusion model to the output *Z̃*₀ comprises inputting the condition y to the diffusion model at at least one level of the levels and successively determining features *f* at the levels of the diffusion model depending on the input *Z_{T},* modulating the features *f* of at least one level depending on the condition y, and determining the output *Z̃*₀ of the diffusion model depending on the modulated features.

The features *f* are modulated at at least one level with the condition y directly rather than propagating the condition y through other levels.

According to an example, the method comprises inputting the condition y to the diffusion model at different levels of the levels, modulating the features *f* at the different levels depending on the condition y inputted at the respective level of the different levels, and determining the output *Z̃*₀ of the diffusion model depending on the modulated features modulated at the different levels.

The method may comprise determining the modulated features at one of the different levels depending on the features or modulated features at another level. This means, the features of one level are modulated and used as the features of a different level.

The method may comprise determining the modulated features at one of the different levels depending on the features of the same level. This means the modulated features replace the unmodulated features of the level.

Mapping the input *Z_{T}* to the output *Z̃*₀ comprises determining a sequence of outputs *Z̃*_{*T*-1}, ... *Z̃*₀ that comprising the output *Z̃*₀.

Determining the sequence of outputs *Z̃*_{*T*-1}, ... *Z̃*₀ may comprise determining a first output *Z̃*_{*T-*1} of the sequence depending on a result of encoding the input *Z_{T}* and decoding the encoded input, e.g., with UNet.

Determining the sequence of outputs *Z̃*_{*T*-1}, ... *Z̃*₀ may comprise successively determining a next output *Z̃*_{*T*-2}, ..., *Z̃*₀ in the sequence depending on the result of encoding the output *Z̃*_{*T*-1}, ... , *Z̃*₁ preceding the next output *Z̃*_{*T*-2}, ... , *Z̃*₀ in the sequence and decoding the encoded output preceding the next output in the sequence, e.g., with UNet.

Encoding or decoding may comprise determining the features at the levels and/or modulating the features *f* depending on the condition y.

The method according to the example comprises a step 610.

The step 610 comprises generating the synthetic digital image *x̃* depending on the output *Z̃*₀.

When processing the denoising process in image space, the output is the digital image *x̃*. This means, the synthetic digital image *x̃* comprises the output and the step 610 is not required.

The diffusion model may be a generative model or part of a generative model to generate training and/or test data for a machine learning system or training and/or test data for an image classifier.

This means, a computer-implemented method for generating the synthetic digital image *x̃* with the diffusion model for generating training and/or test data for training a machine learning system or an image classifier comprises sampling the input *Z_{T}* from the probability distribution, in particular the Gaussian distribution, e.g., as described in step 604, providing the condition *y* for the semantic layout of the synthetic digital image *x̃*, in particular the text, the class label, the semantic label map, the two-dimensional or the three dimensional pose, or the depth map, e.g., as described in step 606, and mapping the input *Z_{T}* with the diffusion model to the output *x̃ or Z̃*₀ of the diffusion model, e.g., as described in step 608.

The synthetic digital image *x̃* may comprise the output *x̃* of the diffusion model, or the synthetic digital image *x̃* is generated depending on the output *Z̃*₀ of the diffusion model, e.g., as described in step 610.

The diffusion model is the generative model or part of the generative model to generate training and/or test data for a machine learning system or training and/or test data for an image classifier. The diffusion model comprises the successive levels.

Mapping the input *Z_{T}* with the diffusion model to the output *x̃ or Z̃*₀ may comprise successively determining features *f* at the levels depending on the input *Z_{T},* inputting the condition y to the diffusion model at at least one level of the levels, modulating the features *f* of at least one level of the levels depending on the condition y, and determining the output *Z̃*₀ of the diffusion model depending on the modulated features.

The machine learning system may be configured for semantic segmentation or object recognition.

The method may comprise a step 612.

The step 612 comprises testing, verifying, or validating the machine learning system depending on the synthetic digital image *x̃*.

The machine learning system may be tested, verified or validated for semantic segmentation or object recognition.

Preferably the machine learning system is configured and trained, verified or validated for recognizing background or an object, in particular a traffic sign, a road surface, a pedestrian, a vehicle, an animal, a plant, infrastructure, or the sky, depending on the synthetic digital image *x̃*.

The method may comprise a step 614.

The step 614 may comprise the method comprises operating the technical system 112 with the machine learning system.

## Claims

1. A computer-implemented method for generating a synthetic digital image (*x̃*) with a diffusion model (202, 502), in particular for generating training and/or test data for training a machine learning system or for training an image classifier, wherein the method comprises sampling (604) an input (*Z_{T}*) from a probability distribution, in particular a Gaussian distribution, providing (606) a condition (*y*) for a semantic layout of the synthetic digital image (*x̃*), in particular a text, a class label, a semantic label map, a two-dimensional or a three dimensional pose, or a depth map, and mapping (608) the input (*Z_{T}*) with the diffusion model (202, 502) to an output (*x̃, Z̃*₀) of the diffusion model (202, 502), wherein the synthetic digital image (*x̃*) comprises the output (*x̃*), or wherein the synthetic digital image (*x̃*) is generated (610) depending on the output (*Z̃*₀), wherein the diffusion model (202, 502) comprises successive levels, wherein mapping (608) the input (*Z_{T}*) with the diffusion model (202, 502) to the output (*x̃*, *Z̃*₀) comprises successively determining features (*f*) at the levels depending on the input (*Z_{T}*), inputting the condition (y) to the diffusion model (202, 502) at at least one level of the levels, modulating the features (*f*) of at least one level of the levels depending on the condition (y), and determining the output (*Z̃*₀) of the diffusion model (202, 502) depending on the modulated features, wherein mapping (608) the input (*Z_{T}*) to the output (*Z̃*₀) comprises determining a sequence of outputs (*Z̃*_{*T*-1}, ... *Z̃*₀) comprising the output (*Z̃*₀), wherein determining the sequence of outputs (*Z̃*_{*T*-1}, ... *Z̃*₀) comprises determining a first output (*Z̃*_{*T*-1}) of the sequence depending on a result of encoding the input (*Z_{T}*) and decoding the encoded input, and successively determining a next output (*Z̃*_{*T*-2}, ..., *Z̃*₀) in the sequence depending on the result of encoding the output (*Z̃*_{*T*-1}, ..., *Z̃*₁) preceding the next output (*Z̃*_{*T*-2}, ..., *Z̃*₀) in the sequence and decoding the encoded output preceding the next output in the sequence, wherein encoding comprises determining the features at the levels and determining the modulated features at one of the different levels depending on the features or modulated features from another level,
**characterised in that** said encoding additionally comprises modulating the features (f) with a SPADE block (304) depending on the condition (y).

2. The method according to claim 1, **characterized in that** mapping (608) the input (*Z_{T}*) with the diffusion model (202, 502) to the output (*Z̃*₀) comprises inputting the condition (y) to the diffusion model (202, 502) at different levels of the levels, modulating the features (*f*) at the different levels depending on the condition (y) inputted at the respective level of the different levels, and determining (608) the output (*Z̃*₀) of the diffusion model (202, 502) depending on the modulated features modulated at the different levels.

3. The method according to one of the previous claims, **characterized in that** the method comprises training (602) the diffusion model (202, 502) to generate the synthetic digital image (*x̃*) depending on a digital reference image (204) captured with a sensor (108), in particular a video, radar, LiDAR, ultrasonic, motion, or thermal image, wherein the condition (y) of the semantic layout of the synthetic digital image (*x̃*) comprises a semantic layout of the digital reference image (204).

4. The method according to one of the preceding claims, **characterized in that** providing (606) the condition (y) comprises providing the semantic layout for a position in the synthetic digital image (*x̃*) or a shape of a background, or of an object, in particular a traffic sign, a road surface, a pedestrian, a vehicle, an animal, a plant, infrastructure, or the sky.

5. The method according to one of the previous claims, **characterized in that** the method comprises determining the modulated features at one of the different levels depending on the features from the same level.

6. The method according to one of the previous claims, **characterized in that** decoding comprises determining the features at the levels and/or modulating the features (*f*) depending on the condition (y).

7. Computer-implemented method for providing a machine learning system, in particular a neural network for semantic segmentation, object recognition or classification of objects, **characterized in that** the method comprises generating a synthetic digital image with the method according to one of the preceding claims, and training, testing, verifying, or validating (612) the machine learning system in particular for semantic segmentation, object recognition, or classification of objects, preferably for recognizing background or an object, in particular a traffic sign, a road surface, a pedestrian, a vehicle, an animal, a plant, infrastructure, or the sky, depending on the synthetic digital image (*x̃*).

8. Computer-implemented method for operating (614) a technical system (112), in particular a computer-controlled machine, preferably a robotic system, a vehicle, a domestic appliance, a power tool, a manufacturing machine, a personal assistant or an access control system, **characterized in that** the method comprises providing the machine learning system with the method according to claim 7, capturing a digital image with a sensor (108), in particular a video, radar, LiDAR, ultrasonic, motion, or thermal image, and determining a control signal for operating the technical system (112) with the machine learning system depending on the digital image.

9. A device (100), **characterized in that** the device (100) comprises at least one processor (102) and at least one memory (104), wherein the at least one memory (104) is configured to store instructions that are executable by the at least one processor (102) and that cause the device (100) to perform the method according to one of the previous claims when executed by the at least one processor (102).

10. A computer program **characterized in that** the computer program comprises computer-readable instructions that, when executed by a computer, cause the computer to execute the steps of the method according to one of the claims 1 to 8.

## Patentansprüche

1. Computer-implementiertes Verfahren zum Erzeugen eines synthetischen digitalen Bildes (x̃) mit einem Diffusionsmodell (202, 502), insbesondere zum Erzeugen von Trainings- und/oder Testdaten zum Trainieren eines Maschinenlernsystems oder zum Trainieren eines Bildklassifizierers, wobei das Verfahren umfasst: Sampeln (604) einer Eingabe (*Z*_{T}) aus einer Wahrscheinlichkeitsverteilung, insbesondere einer Gaußschen Verteilung, Bereitstellen (606) einer Bedingung (y) für ein semantisches Layout des synthetischen digitalen Bildes (x̃), insbesondere einen Text, ein Klassenlabel, eine semantische Labelkarte, eine zweidimensionale oder eine dreidimensionale Stellung oder eine Tiefenkarte, und Abbilden (608) der Eingabe (Z_{T}) mit dem Diffusionsmodell (202, 502) auf eine Ausgabe (x̃, Z̃₀) des Diffusionsmodells (202, 502), wobei das synthetische digitale Bild (x̃) die Ausgabe (x̃) umfasst, oder wobei das synthetische digitale Bild (x̃) in Abhängigkeit von der Ausgabe (Z̃₀) erzeugt wird (610), wobei das Diffusionsmodell (202, 502) aufeinanderfolgende Ebenen umfasst, wobei das Abbilden (608) der Eingabe (*Z_{T}*) mit dem Diffusionsmodell (202, 502) auf die Ausgabe (x̃, Z̃₀) das aufeinanderfolgende Bestimmen von Merkmalen (f) auf den Ebenen in Abhängigkeit von der Eingabe (Z_{T}), das Eingeben der Bedingung (y) in das Diffusionsmodell (202, 502) auf mindestens einer Ebene der Ebenen, das Modulieren der Merkmale (f) mindestens einer Ebene der Ebenen in Abhängigkeit von der Bedingung (y) und das Bestimmen der Ausgabe (Z̃₀) des Diffusionsmodells (202, 502) in Abhängigkeit von den modulierten Merkmalen umfasst, wobei das Abbilden (608) der Eingabe (Z_{T}) auf die Ausgabe (Z̃₀) das Bestimmen einer Sequenz von Ausgaben (Z̃_{T-1}, ... Z̃₀) umfasst, die die Ausgabe (Z̃₀) umfasst, wobei Bestimmen der Sequenz von Ausgaben (Z̃_{T -1}, ... Z̃₀) das Bestimmen einer ersten Ausgabe (Z̃_{T-1}) der Sequenz in Abhängigkeit von einem Ergebnis des Codierens der Eingabe (*Z*_{T}) und des Decodierens der codierten Eingabe und das sukzessive Bestimmen einer nächsten Ausgabe (Z̃_{T-2}, ..., Z̃₀) in der Sequenz in Abhängigkeit von dem Ergebnis des Codierens der Ausgabe (Z̃_{T-1}, ..., Z̃₁) vor der nächsten Ausgabe (Z̃_{T-1}, ···, Z̃₀) in der Sequenz und des Decodierens der codierten Ausgabe vor der nächsten Ausgabe in der Sequenz umfasst, wobei das Codieren das Bestimmen der Merkmale auf den Ebenen und
das Bestimmen der modulierten Merkmale auf einer der unterschiedlichen Ebenen in Abhängigkeit von den Merkmalen oder modulierten Merkmalen aus einer anderen Ebene umfasst, **dadurch gekennzeichnet, dass** das Codieren zusätzlich das Modulieren der Merkmale (f) mit einem SPADE-Block (304) in Abhängigkeit von der Bedingung (y) umfasst.

2. Verfahren nach Anspruch 1, **dadurch gekennzeichnet, dass** das Abbilden (608) der Eingabe (Z_{T}) mit dem Diffusionsmodell (202, 502) auf die Ausga- be(Z̃₀) das Eingeben der Bedingung (y) in das Diffusionsmodell (202, 502) auf unterschiedlichen Ebenen der Ebenen, das Modulieren der Merkmale (f) auf den unterschiedlichen Ebenen in Abhängigkeit von der Bedingung (y), die auf der jeweiligen Ebene der unterschiedlichen Ebenen eingegeben wird, und das Bestimmen (608) der Ausgabe (Z̃₀) des Diffusionsmodells (202, 502) in Abhängigkeit von den modulierten Merkmalen, die auf den unterschiedlichen Ebenen moduliert werden, umfasst.

3. Verfahren nach einem der vorhergehenden Ansprüche, **dadurch gekennzeichnet, dass** das Verfahren das Trainieren (602) des Diffusionsmodells (202, 502) umfasst, um das synthetische digitale Bild (x̃) in Abhängigkeit von einem digitalen Referenzbild (204) zu erzeugen, das mit einem Sensor (108) erfasst wird, insbesondere einem Video-, Radar-, LiDAR-, Ultraschall-, Bewegungs- oder Wärmebild, wobei die Bedingung (y) des semantischen Layouts des synthetischen digitalen Bildes (x̃) ein semantisches Layout des digitalen Referenzbildes (204) umfasst.

4. Verfahren nach einem der vorhergehenden Ansprüche, **dadurch gekennzeichnet, dass** das Bereitstellen (606) der Bedingung (y) das Bereitstellen des semantischen Layouts für eine Position in dem synthetischen digitalen Bild (x̃) oder eine Form eines Hintergrunds oder eines Objekts, insbesondere eines Verkehrszeichens, einer Straßenoberfläche, eines Fußgängers, eines Fahrzeugs, eines Tiers, einer Pflanze, Infrastruktur oder des Himmels, umfasst.

5. Verfahren nach einem der vorhergehenden Ansprüche, **dadurch gekennzeichnet, dass** das Verfahren das Bestimmen der modulierten Merkmale auf einer der unterschiedlichen Ebenen in Abhängigkeit von den Merkmalen von derselben Ebene umfasst.

6. Verfahren nach einem der vorhergehenden Ansprüche, **dadurch gekennzeichnet, dass** das Decodieren das Bestimmen der Merkmale auf den Ebenen und/oder das Modulieren der Merkmale (f) in Abhängigkeit von der Bedingung (y) umfasst.

7. Computer-implementiertes Verfahren zum Bereitstellen eines Maschinenlernsystems, insbesondere eines neuronalen Netzwerks zur semantischen Segmentierung, Objekterkennung oder Klassifizierung von Objekten, **dadurch gekennzeichnet, dass** das Verfahren umfasst: Erzeugen eines synthetischen digitalen Bildes mit dem Verfahren nach einem der vorhergehenden Ansprüche und Trainieren, Testen, Verifizieren oder Validieren (612) des Maschinenlernsystems insbesondere zur semantischen Segmentierung, Objekterkennung oder Klassifizierung von Objekten, vorzugsweise zum Erkennen von Hintergrund oder einem Objekt, insbesondere einem Verkehrszeichen, einer Straßenoberfläche, einem Fußgänger, einem Fahrzeug, einem Tier, einer Pflanze, Infrastruktur oder dem Himmel, in Abhängigkeit von dem synthetischen digitalen Bild (x̃).

8. Computer-implementiertes Verfahren zum Betreiben (614) eines technischen Systems (112), insbesondere einer computer-gesteuerten Maschine, vorzugsweise eines Robotersystems, eines Fahrzeugs, eines Haushaltsgeräts, eines Elektrowerkzeugs, einer Fertigungsmaschine, eines persönlichen Assistenten oder eines Zugangskontrollsystems, **dadurch gekennzeichnet, dass** das Verfahren umfasst: Bereitstellen des Maschinenlernsystems mit dem Verfahren nach Anspruch 7, Erfassen eines digitalen Bildes mit einem Sensor (108), insbesondere einem Video-, Radar-, LiDAR-, Ultraschall-, Bewegungs- oder Wärmebild, und Bestimmen eines Steuersignals zum Betreiben des technischen Systems (112) mit dem Maschinenlernsystem in Abhängigkeit von dem digitalen Bild.

9. Vorrichtung (100), **dadurch gekennzeichnet, dass** die Vorrichtung (100) mindestens einen Prozessor (102) und mindestens einen Speicher (104) umfasst, wobei der mindestens eine Speicher (104) zum Speichern von Anweisungen ausgelegt ist, die von dem mindestens einen Prozessor (102) ausführbar sind und die Vorrichtung (100) veranlassen, das Verfahren nach einem der vorhergehenden Ansprüche auszuführen, wenn sie von dem mindestens einen Prozessor (102) ausgeführt werden.

10. Computerprogramm, **dadurch gekennzeichnet, dass** das Computerprogramm computer-lesbare Anweisungen umfasst, die bei Ausführung durch einen Computer den Computer veranlassen, die Schritte des Verfahrens nach einem der Ansprüche 1 bis 8 auszuführen.

## Revendications

1. Procédé mis en œuvre par ordinateur pour générer une image numérique synthétique (x̃) avec un modèle (202, 502) de diffusion, en particulier pour générer des données d'apprentissage et/ou de test destinées à entraîner un système d'apprentissage automatique ou à entraîner un classificateur d'images, **caractérisé en ce que** le procédé comprend l'échantillonnage (604) d'une entrée (*Z_{T}*) à partir d'une distribution de probabilité, en particulier d'une distribution gaussienne, la fourniture (606) d'une condition (y) pour une disposition sémantique de l'image numérique synthétique (x̃), en particulier un texte, un étiquette de classe, une carte d'étiquettes sémantiques, une pose bi- ou tridimensionnelle, ou une carte de profondeur, et la mise en correspondance (608) de l'entrée (Z_{T}) munie du modèle (202, 502) de diffusion avec une sortie (x̃, Z̃₀) du modèle (202, 502) de diffusion, l'image numérique synthétique (x̃) comprenant la sortie (x̃), ou l'image numérique synthétique (x̃) étant générée (610) en fonction de la sortie (Z̃₀), le modèle (202, 502) de diffusion comportant des niveaux successifs, la mise en correspondance (608) de l'entrée (*Z_{T}*) munie du modèle (202, 502) de diffusion avec la sortie (x̃, Z̃₀) comprenant la détermination successive de caractéristiques (f) aux niveaux en fonction de l'entrée (Z_{T}), l'introduction de la condition (y) dans le modèle (202, 502) de diffusion a au moins un niveau parmi les niveaux, la modulation des caractéristiques (f) d'au moins un niveau parmi les niveaux en fonction de la condition (y), et la détermination de la sortie (Z̃₀) du modèle (202, 502) de diffusion en fonction des caractéristiques modulées, la mise en correspondance (608) de l'entrée (Z_{T}) avec la sortie (Z̃₀) comprenant la détermination d'une séquence de sorties (Z̃_{T-1}, ...Z̃₀) comprenant la sortie (Z̃₀), la détermination de la séquence de sorties (Z̃ _{T -1}, ...Z̃₀) comprenant la détermination d'une première sortie (Z̃_{T-1}) de la séquence en fonction d'un résultat du codage de l'entrée (*Z_{T}*) et du décodage de l'entrée codée, et la détermination successive d'une sortie (Z̃_{T-2}, ..., Z̃₀) suivante de la séquence en fonction du résultat du codage de la sortie (Z̃_{T-1}, ..., Z̃₁) précédant la sortie suivante (Z̃_{T-1}, ···, Z̃₀) dans la séquence et du décodage de la sortie codée précédant la sortie suivante dans la séquence, le codage comprenant la détermination des caractéristiques aux niveaux
et
la détermination des caractéristiques modulées à l'un des différents niveaux en fonction des caractéristiques ou des caractéristiques modulées provenant d'un autre niveau, **caractérisée en ce que** ledit codage comprend en outre la modulation des caractéristiques (f) avec un bloc (304) de SPADE en fonction de la condition (y).

2. Procédé selon la revendication 1, **caractérisé en ce que** la mise en correspondance (608) de l'entrée (Z_{T}) munie du modèle (202, 502) de diffusion avec la sortieZ̃(₀) comprend l'introduction de la condition (y) dans le modèle (202, 502) de diffusion à différents niveaux parmi les niveaux, la modulation des caractéristiques (f) aux différents niveaux en fonction de la condition (y) introduite au niveau respectif parmi les différents niveaux, et la détermination (608) de la sortie (Z̃₀) du modèle (202, 502) de diffusion en fonction des caractéristiques modulées aux différents niveaux.

3. Procédé selon l'une des revendications précédentes, **caractérisé en ce que** le procédé comprend l'entraînement (602) du modèle (202, 502) de diffusion pour générer l'image numérique synthétique (x̃) en fonction d'une image (204) de référence numérique capturée avec un capteur (108), en particulier une image vidéo, radar, LiDAR, ultrasonore, de mouvement ou thermique, la condition (y) de la disposition sémantique de l'image numérique synthétique (x̃) comprenant une disposition sémantique de l'image (204) de référence numérique.

4. Procédé selon l'une des revendications précédentes, **caractérisé en ce que** la fourniture (606) de la condition (y) comprend la fourniture de la disposition sémantique pour une position dans l'image numérique synthétique (x̃) ou une forme d'un fond, ou d'un objet, en particulier un panneau de signalisation, une surface de route, un piéton, un véhicule, un animal, une plante, une infrastructure ou le ciel.

5. Procédé selon l'une des revendications précédentes, **caractérisé en ce que** le procédé comprend la détermination des caractéristiques modulées à l'un des différents niveaux en fonction des caractéristiques provenant du même niveau.

6. Procédé selon l'une des revendications précédentes, **caractérisé en ce que** le décodage comprend la détermination des caractéristiques aux niveaux et/ou la modulation des caractéristiques (f) en fonction de la condition (y).

7. Procédé mis en œuvre par ordinateur pour fournir un système d'apprentissage automatique, en particulier un réseau neuronal pour la segmentation sémantique, la reconnaissance d'objets ou la classification d'objets, **caractérisé en ce que** le procédé comprend la génération d'une image numérique synthétique au moyen du procédé selon l'une des revendications précédentes, et l'entraînement, le test, la vérification ou la validation (612) du système d'apprentissage automatique pour la segmentation sémantique, la reconnaissance d'objets ou la classification d'objets, de préférence pour la reconnaissance d'un arrière-plan ou d'un objet, en particulier d'un panneau de signalisation, d'une chaussée, d'un piéton, d'un véhicule, d'un animal, d'une plante, d'une infrastructure ou du ciel, en fonction de l'image numérique synthétique. (x̃).

8. Procédé mis en œuvre par ordinateur pour faire fonctionner (614) un système technique (112), en particulier une machine commandée par ordinateur, de préférence un système robotique, un véhicule, un appareil électroménager, un outil électrique, une machine de fabrication, un assistant personnel ou un système de contrôle d'accès, **caractérisé en ce que** le procédé comprend la fourniture du système d'apprentissage automatique du procédé selon la revendication 7, la capture d'une image numérique avec un capteur (108), en particulier d'une image vidéo, radar, LiDAR, ultrasonore, de mouvement ou thermique, et la détermination d'un signal de commande pour faire fonctionner le système technique (112) au moyen du système d'apprentissage automatique en fonction de l'image numérique.

9. Dispositif (100), **caractérisé en ce que** le dispositif (100) comprend au moins un processeur (102) et au moins une mémoire (104), la ou les mémoires (104) étant configurées pour stocker des instructions qui sont exécutables par le ou les processeurs (102) et qui amènent le dispositif (100) à réaliser le procédé selon l'une des revendications précédentes lorsqu'elles sont exécutées par le ou les processeurs (102).

10. Programme d'ordinateur, **caractérisé en ce que** le programme d'ordinateur comprend des instructions lisibles par ordinateur qui, lorsqu'elles sont exécutées par un ordinateur, amènent l'ordinateur à exécuter les étapes du procédé selon l'une des revendications 1 à 8.
